# EUROPEAN PATENT APPLICATION

(11) **EP 3 816 879 A1**
(43) Date of publication of application: **05.05.2021**
(21) Application number: 19206944.1
(22) Date of filing: 04.11.2019
(51) Int. Cl.: G06N 20/20

(54) **A METHOD OF YIELD ESTIMATION FOR ARABLE CROPS AND GRASSLANDS AND A SYSTEM FOR PERFORMING THE METHOD**

(71) Applicant: Gaf AG, 80634 Munich (DE)
(72) Inventor: AYANU, Yohannes, 86163 Augsburg (DE); KÖHLER, Christian, 82110 Germering (DE)
(74) Representative: Maiwald Patent- und Rechtsanwaltsgesellschaft mbH

(57) **Abstract**

Accurate yield estimation is a core part of planning in agriculture for assessing the variation in productivity in order to insure food security across the globe. A robust method for estimating crop and grassland yield with very high accuracy is disclosed. The method is flexible and hence combinations of multiple datasets such as indices derived from Remote Sensing (RS) data, meteorological data, soil data, information on management practices and other related data can be used for crop yield estimation at any spatio-temporal scale. There is no restriction in the data requirements and any of the datasets mentioned above can be used if not all datasets are available, which enables comparing results produced using different datasets. In the method, crop and grassland yield estimation is not limited to a fixed scale and/or geographic location. Thus, the method is scalable with low cost both spatially and temporally to estimate crop yield for any agro-ecological area across the world. With limited requirements of reference data, the method is capable of delivering yield estimation with very high accuracy for a selected specific crop type and/or multiple crops simultaneously.

## Description

The present invention is related to a method of yield estimation for arable crops and/or grasslands by use of multiple datasets received from one or more data sources.

In the prior art two major categories of approaches for crop and grassland yield estimation have been provided i.e. model-driven and data-driven approaches (Chen, X., & Cournede, P. H., Model-Driven and Data-Driven Approaches for Crop Yield Prediction: Analysis and Comparison. In Proceedings of 19th International Conference on Computational Statistics and Data Analysis (ICCSDA2017), 2017).

The model-driven approaches are based on simulation of the dynamics of crop/grass growth in response to interaction of plants with dynamics in the environment. These mechanistic modelling approaches, which are conventionally referred to as process-based models, have been commonly used for crop and grassland yield estimation. The models are driven by certain processes that can usually be described by a set of mathematical equations between crop/grassland yield and its influential variables. In such cases the mathematical equations are predefined irrespective of the nature of the data. The variables used for modelling are also predefined and the corresponding data should be available to be able to run the models. Thus, calibration of the models requires parameterizing complex, multidimensional and dynamic biophysical processes determining crop/grass growth. These models are based on a number of priori assumptions about the data generating systems and the data should be collected with a carefully controlled experimental design. Due to this demanding phase in the crop and grassland yield estimation, these models are often cost-inefficient and are applicable only at small spatial scale where intensive follow up of crop/grass growth in response to the dynamic biophysical processes is possible. Hence, a model developed for a particular location and crop/grassland type may not be replicable or scalable to other areas.

The data-driven approaches are based on analysis of the data to find relationships between crop/grassland yield and relevant variables without explicit knowledge of the dynamics in biophysical processes that determine crop/grass growth. The classical statistical models (e.g. linear regression) are widely used data-driven approaches for crop/grassland yield estimation. Statistical models primarily focus on inference based on samples that involves creation and fitting of a project-specific probability model. These classical models are designed for data with a few dozen input variables and small to moderate sample sizes and the model is expected to fill in the unobserved aspects. However, as the number of input variables and interactions among them increases, the model that captures these relationships becomes more complex and its precision declines. Therefore, statistical models are inefficient and deliver less accurate estimations in such cases where there is a need to include large number of variables for estimating crop/grassland yield. These models are primarily created for finding an easily interpretable significance of relationships between crop/grassland yield and relevant variables and may not deliver estimations with high accuracy.

The more advanced data-driven approaches are Machine Learning Algorithms (MLA) that are entirely based on learning from a training set of data to make estimation on unseen data. The developments in big data and high performance computing technologies contributed to the emergence of MLA, creating new opportunities in the data analytics for the data intensive multi-disciplinary agricultural technologies including crop/grassland yield estimation.

Unlike statistical models, MLA models are aimed at providing estimations and predictions with very high accuracy and can handle a very large number of variables and complex datasets. Contrary to the process-based models that require intensive calibration of the dynamic processes that affect crop/grass growth, MLA exploits the different aspects of scarcely available field measured data to deliver yield estimations with very high accuracy based on various types of indicators. A MLA does not rely on predefined mathematical equations but learn the relationship between the variables from the data itself to fit a suitable model.

Pertaining to the data-driven approaches, recent developments in the fields of Remote Sensing (RS) and Geoinformation Systems (GIS) enable capturing of spatially-explicit data at various spatio-temporal scales and provide opportunities to improve crop/grassland yield estimation. Various vegetation indices (e.g. Normalized Difference Vegetation Index - NDVI, Enhanced Vegetation Index - EVI) can be derived from RS data and used for modelling crop/grassland yield. In addition, derivatives of these indices (e.g. Vegetation Condition Index - VCI, Vegetation Health Index - VHI) can also be used for mapping catastrophic events like drought severity to be able to explain yield anomalies. Incorporating these indices in yield estimation could largely improve decision-making in the agricultural sector for instance, improving the effectiveness of insurance contracts (R. Bokusheva et al., Satellite-based vegetation health indices as a criterion for insuring against drought-related yield losses. Agricultural and Forest Meteorology, Volume 220, 2016, pages 200 - 206).

Supported with advancements in RS technologies, data on weather conditions (e.g. precipitation, temperature, duration of sunshine) and soil (e.g. soil properties and classes) are also becoming available at varying spatio-temporal scales globally. Hence, different indicators can be derived from weather related data and used for estimating crop/grassland production and failure due to hazards. Besides these, data on management practices and socio-economic factors are also available from different sources which can also be used for crop/grassland yield estimation.

Availability of such diverse sources of data for deriving indicators at large-scale could boost the accuracy of crop/grassland yield estimation if proper data-driven approaches are utilized. However, the level of development in application of data-driven methods in agricultural information systems is still in its infant stage and the potential of the state-of-the-art technologies like MLA is not yet well-exploited.

US2018/0211156A1 discloses a system and method for computing yield values through a neural network for agricultural fields using crop type, environmental and management practice data.

US2017/0161560A1 discloses a system and method based on supervised learning methods for predicting harvest yield for fruits and related crops using crop monitoring data such as images, videos and environmental sensor inputs.

Nevertheless, though there are some efforts recently, a robust, cost-efficient and scalable method which is flexible in terms of data requirements but delivers crop/grassland yield estimation with very high accuracy is not available so far.

Therefore, it is the object of the present invention to develop a method for an operational use in crop and/or grassland yield estimation which addresses the disadvantages of the prior art. In particular, a robust, reliable, timely, cost-efficient and scalable yield estimation method for arable crops and grasslands based on combinations of data from multiple sources, for instance, including indices derived from RS data, meteorological data, information on management practices and any other relevant data is desired.

The mentioned object is solved by a method including the features as claimed in independent claim 1 and a system configured to perform the method as claimed. Advantageous aspects of the method and system are subject-matter of the dependent claims.

According to claim 1, the method selects at least two different Level One Machine Learning Algorithms (L1 MLA) from a database providing different MLA models. The selected MLA models are trained with trainset data as input data. The used trainset data is previously generated as a proportion of the available total amount of datasets received from one or more data sources. The received datasets are relevant for the crop and/or grassland type for which yield estimation should be conducted. In particular, the input data shows a spatial and/or temporal dependence. By pre-processing the received input data trainset and testset data is generated. Trainset data is used for training of the L1 MLA models.

Following the successfully completed training of the L1 MLA models, at least some of them perform prediction on the basis of trainset data. At least one new MLA model, also called metamodel or Level Two MLA model (L2 MLA), is introduced which learns from the intermediate prediction results of the L1 MLA models. The at least one introduced L2 MLA model may be manually or automatically selected from an available database providing a selection of different L2 MLA models.

In case more than one L2 MLA models are trained on the bases of the intermediate prediction datasets, the best operating and trained L2 MLA model is selected for future prediction of crop/grassland yield on unseen data. That is to say the method is now successfully initialized for yield estimation on available actual data, called unseen data.

In summary, an automated method is provided that integrates numerous MLA models in a single modelling platform. Thereby, a large number of selected L1 MLA models from an available list of different L1 MLA, for instance, up to hundred models or more, can be trained as Level One MLA models and subsequently stacked to create at least one L2 MLA model, also called metamodel, for crop/grassland yield estimation on unseen data. Coping with the constraints of limited ground data availability, the method exploits different aspects of the scarcely available reference data to deliver crop and grassland yield estimations with very high accuracy.

Compared with the existing classical/conventional crop and grassland yield estimation methods, the inventive method has numerous advantages. According to one of the key advantages of the inventive method, metamodels are created by stacking multiple models from different L1 MLA to increase accuracy of crop/grassland yield estimation. Compared with predictive performance of a single best performing algorithm, metamodels (L2 MLA models) provide high accuracy since limitation of individual algorithms is compensated by the other algorithms in an ensemble/stack. Unlike most of the statistical models and single classical MLA models, the system enables exploiting the strengths of multiple MLA and delivers crop/grassland yield estimations with very high accuracy. One of the advantages of the method is its flexibility that allows integration of different types of data (numeric and categorical) from multiple sources.

According to a preferred aspect of the invention, the received multiple datasets are obtained from different data sources. The received datasets may include one or more indices derived from RS data. For instance, datasets such as the Normalized Difference Vegetation Index (NDVI) and/or Optimized Soil-Adjusted Vegetation Index (OSAVI) and/or Atmospherically Resistant Vegetation Index (ARVI) and/or Chlorophyll Vegetation Index (CVI) and/or Difference Vegetation Index (DVI) are received and used for crop/grassland yield estimation. Additionally, data concerning at least one of the meteorological variables such as temperature, precipitation, duration of sunshine and evapotranspiration may be received and used. Further, at least one drought indicator may be considered as well as information on farming management practices applied in the past, present or near future. Basically, any other data relevant for crop/grassland yield estimation may be considered. In this regard, the system developed according to the invention is not dependent on the variables and/or data to be used for training the models. Thus, the crop/grassland yield estimation can be done with any available relevant data without being restricted to a pre-defined list of data. For instance, yield estimation can be done using only indices derived from RS data if data on weather conditions or other datasets are not available and vice versa.

A further advantage of the method is its capacity to deliver accurate results even when there is limited reference data available. The method exploits the different aspects of the scarcely available reference data to find accurate estimations of crop/grassland yield based on the independent input variables used in the modelling.

A further advantage of the method is its cost-efficient scalability for estimating crop and grassland yield for diverse areas across the world at varying temporal resolution. The method is not restricted to a specific geographic location, spatial-scale and/or temporal time-step. Hence, data can be extracted at different spatio-temporal scales and used to estimate crop/grassland yield at the preferred spatio-temporal scale.

A further advantage of the method is its flexibility that allows estimating yield for any crop/grassland type. The method is not restricted to a particular type of crop and can be used to estimate yield of a specific crop or multiple crops simultaneously. In addition, the method can be used to estimate yield for various types of grasslands without restriction.

A further advantage of the method is that the MLA models can be trained to estimate absolute or relative yield depending on the user's preferences. Flexibility of the training process enables training of the MLA models for a specific or multiple crops simultaneously to estimate yield and/or yield loss. The patterns and volatility of yield over time and yield loss can be estimated in relation to the reference yield (long-term mean). For a more direct application in assessing the yield variations, relative yield calculated as a proportion of actual and long-term mean can be used as input data for training in order to directly estimate relative yield which is an indicator of yield loss.

According to a further advantageous aspect of the method, an automated input data exploration, analysis and pre-processing is implemented enabling integration of any type of data in the system for crop/grassland yield estimation. Users can thus assess quality of the input data and evaluate its potential impacts on the final results of the crop/grassland yield estimation. Accordingly, data can be further processed and/or excluded from the modelling if it is of very poor quality. For instance, descriptive statistics may be calculated from the received datasets. Further preferable, at least one pairwise correlation matrix can be generated and visualized. By calculation of such matrix identification of possible predictors that are correlated with the dependent variable (crop/grassland yield) as well as correlations between predictors is possible. The results from the data quality assessment may be visualized by the user and/or stored and/or exported in a data file (e. g PDF format). Based on this result, it is possible to make decisions on the data. For instance, some of the highly correlated variables can be removed if it is desired to reduce the overall processing time during crop/grassland yield estimation.

As already mentioned above, the method may be capable of processing numerical and categorical variables. In order to enable direct use of categorical variables in the subsequent modelling process, it may be preferable if categorical variables are priorly detected in the received multiple datasets and adapted into appropriate form for subsequent processing. In particular, it is advantageous to create at least one new dummy variable representing a categorical variable which is used by the L1 and/or L2 MLA models.

The step of pre-processing the received multiple datasets may further or alternatively involve normalization (e.g. scale, centred or min-max methods), or transformation of the received datasets. Furthermore, it is conceivable to detect nodata values included in the received datasets. Such data values may be simply discarded or replaced by values determined by interpolation of given data. Furthermore, it is preferred to detect and optionally visualize outliers using plot diagrams. This may involve automatic univariate and multivariate detection of outliers, extracting the most influential variables including their respective rows with outliers, treating or removing outliers. The results of outliers detection can be exported as files (PDF, html, csv formats).

The step of pre-processing may optionally include identification of near-zero-variables which could be in a further preferred aspect removed from the input datasets. From the received input dataset, variables with no variations or close to zero variation in their observations are regarded as near-zero-variables. These variables appear to be less important in the modelling and can be removed or further processed to make them useful. It may be possible that cutting limits defining whether a variable should be considered as near-zero-variable or not can be configured by the user. It may further be configurable whether these variables should be removed or restructured.

According to a further advantageous development of the method, flexibility of the system allows manual or automated hyperparameter tuning for efficient training of the models. Hyperparameters for 100 or more MLA models can be tuned manually by entering their values or in an automated way by defining the tuning length. According to a further advantageous aspect of the method, means enabling users to control/monitor the training process are provided. In another aspect of the invention, an automated training process is designed in a flexible way allowing any type of relevant input datasets.

According to a further advantageous aspect of the method, means enabling an automated evaluation of the performance of the models and metamodels is provided which provides opportunity for selecting the models and/or a metamodel to be used for crop/grassland yield estimation with high accuracy.

According to a preferred aspect of the invention, the number of trained L1 MLA models should be limited to a reduced number. In particular, the performance of the trained L1 MLA models should be determined and only the best performing MLAs should be selected for further stacking and development of the metamodel. To determine the performance of said L1 MLA models metrics may be calculated. Appropriate methods for calculation of metrics are MAE, RMSE, R². For each of the L1 MLA models summary statistics such as min, max, mean, median, 1st quadrat and 3rd quadrat may be computed for the metrics RMSE, MAE and R². Moreover, it is also possible that actual values of these metrics are calculated for each of the models. According to a particular preferred aspect, the computed statistics are visualized as plots (e.g. dot plots) in order to compare performance of the MLA models based on the preferred metrics. It may also be conceivable that correlation matrix between the results from the different MLA models are calculated to check relation between the models.

In case a limited number of trained L1 MLA models is selected, prediction data produced by said selected models is used as input trainset data for the L2 MLA models.

According to a further preferred aspect of the invention, one or more L2 MLA models should be chosen as the final metamodel from the trained L2 MLA models. The final metamodel is then used for crop/grassland yield estimation on unseen data. The selection of at least one final metamodel should also be based on calculated evaluation metrics. Preferably, the same or similar methods as explained above with respect to the selection of L1 MLA models should be used. However, evaluation metrics should be calculated for each trained L2 MLA model providing prediction results on special testset data which is independent and different to the trainset data used in the previous steps. In particular, said testset data may be generated by partitioning the received multiple datasets into trainset data and testset data.

In a further aspect of the invention, training of L1 MLA models and/or L2 MLA models is performed on the basis of the trainset data or prediction datasets. In particular, trainset data comprises input data and reference output data. The model predicts output data based on the given input data and compares its prediction result to the reference output data. By optimizing the MLA parameters, the MLA is trained. Between subsequent training runs the used trainset data may be resampled using methods like Bootstrapping and/or K-Fold Cross-Validation (CV) and/or Repeated K-fold Cross-Validation (repeated CV) and/or Leave-One-Out Cross-Validation (LOOCV).

As already indicated in the above paragraphs some parameters of the inventive method may be configurable by a user. In particular, the method provides a user interface by which manual selection of L1/L2 MLA models and/or groups of L1/L2 MLA models to be used is possible. Further, manual configuration of hyperparameters and/or configuration on metric calculation methods for L1/L2 MLA model evaluation could also be possible. The interface may also provide a possibility for manual configuration of the sample size and/or resampling technique to be carried out on the trainset data. Parameters of data pre-processing and/or data partitioning may be manually selectable.

The inventive method may be particularly applied in the field of crop/grassland insurance and re-insurance. Estimation results may be rather helpful when defining and setting contractual conditions for crop/greassland insurances.

In addition to the inventive method, the present invention is also directed to a system for crop/grassland yield estimation comprising an input interface for receiving multiple datasets from one or more data sources. The system includes at least one processing means for executing the method according to the invention. Also, the invention is directed to a computer-readable storage device storing program code which when executed by a processing means performs the method according to the invention.

The different components of the method and system and embodiments for which protection is sought in the claims are illustrated in the drawings presented in FIGs. 1 to 6. More detailed explanation of the embodiments is provided in the following sections with reference to the drawings.
FIG. 1 shows the feature engineering steps involved for integrating data from different sources and preparation of trainset and testset data for the modelling
FIG. 2 displays the model engineering phase that includes steps involved in hyperparameter tuning, resampling and model evaluation for generating the level 1 models and creating trainset data for level 2 models.
FIG. 3 illustrates the model engineering phase of the system for creating level 2 models and selecting the final metamodel to be used for estimating crop/grassland yield.
FIG. 4 illustrates the steps involved in estimating crop/grassland yield using the selected final metamodel and unseen input data.
FIG. 5 shows the steps involved in the validation of the yield estimation results using independent reference yield data.
FIG 6. shows the components/modules of the system for crop/grassland yield estimation.

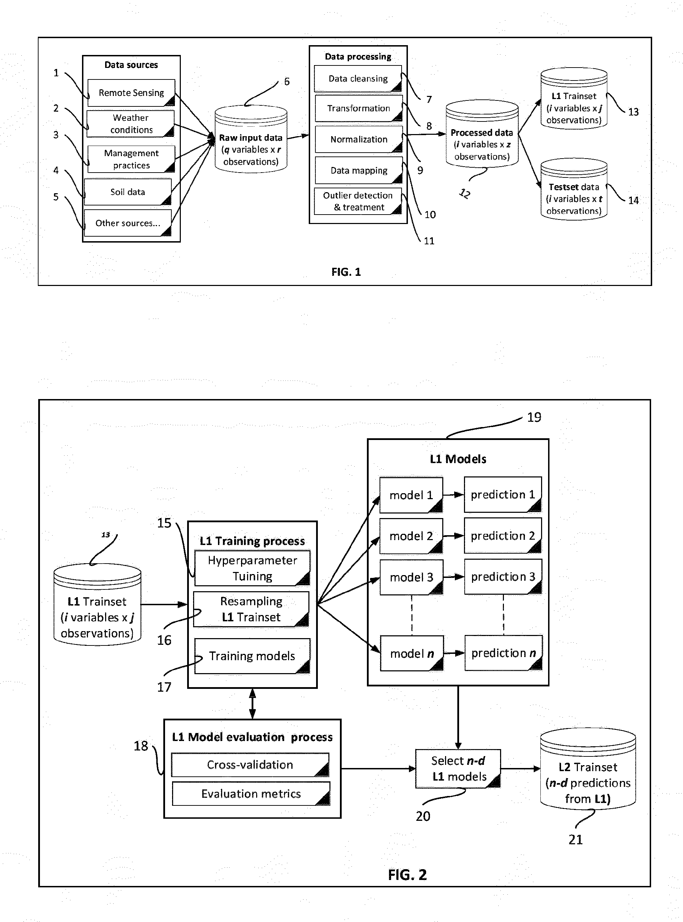

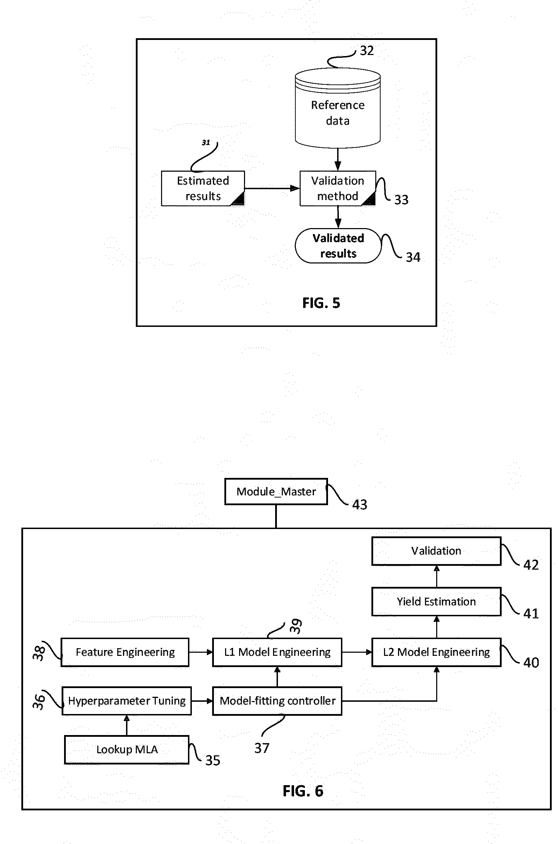

The disclosed method is organized and implemented in separate but inter-related modules (FIG. 6) comprising several embodiments presented in FIGs. 1 - 5.

A list of all MLAs implemented in the model are included in the lookup module 35. The MLAs are grouped into different categories depending on their type and included as a list. Users can select the preferred group(s) containing list of MLAs and the preferred MLA group(s) can be specified in the module master in the system 43.

The module master 43 allows users to select the basic settings required to run the system based on the data and user's preferences. These include options for specifying: the model fitting type to use, MLA group(s) to be used in the modelling, MLA to be used as super-model to stack the trained MLA, the preferred pre-processing type, path to files & directories like input path, output path, file paths, path to output for data exploring step, paths to training and prediction and reference datasets sample size and resampling technique to use. In addition, the module 43 provides alternatives for selecting suitable processing steps depending on the data and user's preferences which include choosing whether or not to do manual hyperparameter tuning, pre-processing of data, data partitioning, remove near-zero-variables and drop outliers.

The list of hyperparameters and their default values as well as the corresponding MLA for which the hyperparameter tuning is required are integrated in hyperparameter tuning module 36. The module 36 for hyperparameter tuning is loaded only if the hyperparameter tuning is specified in the module master 43.

The feature engineering module 38 incorporates functionalities presented in FIG. 1 in which input data are explored in detail and processed before using them in the modelling. Further details will be given at a later stage.

The L1 and L2 training processes are controlled using the module 37 designed for controlling model fitting based on the major required settings specified at the module master 43 and the hyperparameter tuning values specified in module 36.

The level 1 model engineering module 39 incorporates the different components illustrated in FIG. 2 in which numerous MLA models are trained, evaluated and selected for use in L2 model engineering. The L1 Trainset data 13 is used for fitting the models. The fitted level 1 models 19 will be saved in a single file containing a list of L1 models.

The performance of the trained level 1 models is evaluated using metrics such as RMSE, MAE and R² implemented in the L1 engineering module 39. Each of the MLA models is separately evaluated for their performance by resampling the data and implementing methods such as Bootstrapping, K-fold Cross-Validation and Repeated K-fold Cross-Validation. Statistical measures for evaluating the MLA models (e.g. MAE, RMSE, R²) are automatically calculated and used for the evaluation. The preferred models can be selected as input for level 2 model engineering module 40 or discarded based on results of the evaluation. Thus, based on the results of the model evaluation, MLA models can be excluded or included in the level 2 models based on the metrics.

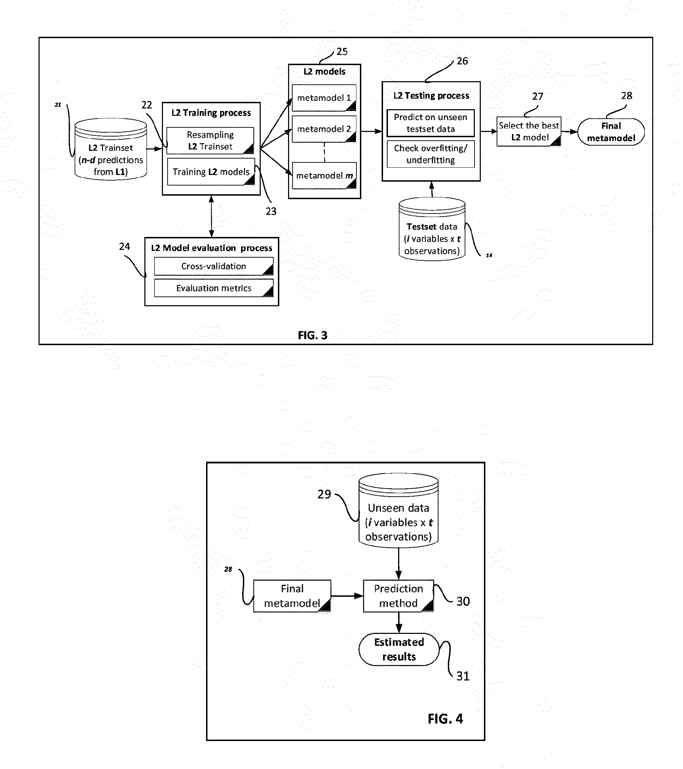

L2 model engineering module 40 consists of the components shown in FIG. 3. The models selected after evaluation of their performance 21 are used to create level 2 models (metamodels) 25 that are the super - models combining many L1 models. In the Lookup module 35 several MLAs are provided as options for the L2 models 25 i.e. "super models/learners" to be trained in L2 training process. Hence, several metamodels 25 can be created in level 2 model engineering module 40 using prediction results from level 1 models (L1 MLA). Furthermore, the level 2 models 25 (L2 MLA or metamodels) are also evaluated using the evaluation metrics 24 to select the best metamodel 28 to be used for production i.e. prediction on independent unseen datasets. The major pitfalls in modelling, i.e. over-fitting and under-fitting are checked for each of the metamodels using the calculated metrics (e.g. RMSE values of the results derived from cross-validation step) based on results of predictions on testset data 26. The best metamodel is then selected based on the criteria that over-fitting and under-fitting are minimized so that the metamodel is able to generalize well on unseen data.

In the yield estimation module 41 the operational step in which the selected metamodel 28 is used for production i.e. predicting on unseen data to estimate crop/grassland yield is implemented. If pre-processing (e.g. scaling) was applied on the input data, the predicted final results will also have scaled values. In such cases, in an embodiment of module 41 the model outputs are rescaled to original data format.

In module master 43 several resampling methods are defined (e.g. K-fold Cross Validation (CV), Repeated K-fold Cross Validation (repeated-CV), Bootstrapping (Bootstrap) and The Leave-One-Out Cross-Validation (LOOCV). Each of these methods involves resampling and reusing the data in different model runs to produce more accurate results while training the MLA models. The preferred method is specified at 43 including sample size, number of cross-validation and repeats. For the selected method, model accuracy evaluation metrics (RMSE, MAE, R²) for level 1 and level 2 models are computed during the model engineering processes at 39 and 40.

The validation module 42 consists of a procedure for validating the estimated results as shown in FIG. 5. Validation is realized only if reference yield data 32 is available. However, most often independent reference data 32 that can be used for validation are not available. To address this problem, the system integrates various resampling methods to evaluate the model performance during the training phase. Nevertheless, when there is available reference data, validation procedure based on metrics (RMSE, R²) is implemented in 42. The module for validation 42 is initialized only if reference data availability is confirmed by the user in the module master 43.

The modules 35-42 listed above are wrapped within the master module 43 from which they can be loaded to start the modelling process. Users are required to interact with the module master 43 only to do test runs to estimate crop/grassland yield. Nevertheless, other modules may have to be explored for more detailed understanding and application of the system.

The input data preparation phase as performed by the feature engineering module 38 is explained in more detail in the following. The module 38 provides an option to generate an overview of the received data using methods implemented for calculation of descriptive statistics from the input data, visualizing and exporting the results as file (e.g. PDF, html and csv formats). Nodata (NA) values in the data are checked and replaced by interpolating from the input data in an automated process. In addition, outliers affect performance of the model and need to be detected, visualized and treated and/or removed. This involves automatic univariate and multivariate detection of outliers, extracting the most influential variables including their respective rows with outliers, treating or removing outliers and visualizing outliers using plots and exporting results as files (PDF, html, csv formats).

Further, pairwise correlation matrix may be generated and visualized. This enables to identify predictors that are correlated with the dependent variable (crop/grassland yield) as well as correlation between the predictors. The results are visualized with plots and exported as file (PDF format). Based on this result, some of the highly correlated variables can be removed to reduce the processing time during the yield estimation.

Further, the input data is pre-processed using preferred methods that include normalization 9, i.e. scale, centred or min-max methods, PCA and logarithmic transformation 8. In the system, options are provided as to whether to do pre-processing and to choose preferred type of pre-processing. A method for checking and mapping categorical data to the model is implemented in module 38. For direct use in the modelling, dummy variables are created from the categorical data for each of the categories in each variable.

Module 38 further provides means for identifying near-zero-variables from the input data and removing or further processing the same. This involves checking of variables with no variations or close to zero variation in their observations. These variables are less important in the modelling and can be removed or further processed to make them useful. Users can define the cutting limits for regarding a variable as near-zero-variable, choose whether to remove the identified variable(s) or restructure the observations in the variables if removing them is considered harmful.

Provided that data partitioning is considered and defined in the module master at 43, in module 38 the input data is partitioned into level 1 trainset 13 and testset datasets 14 based on the partitioning ratio specified at module 43. If partitioning of data is not intended, the entire input data will be used for training with the assumption that separate unseen data is available for crop/grassland yield estimation.

Most of the MLAs implemented require tuning of several hyperparameters. In an embodiment of module 36 the default values for up to 100 MLA models are initially set wherein said default values are evaluated after intensive testing using different crops (e.g. corn, soybean, winter wheat, winter barely, silage maize, etc.) and grassland. The default hyperparameter tuning can be used to do initial training of the models. Alternatively, when there is a need to do further hyperparameter tuning, the default values can be changed for each of the hyperparameters. Since some of the MLAs have common hyperparameters, each of the MLA access/share the defined hyperparameters using functions that loop through the MLAs and the hyperparameters. Alternative to the manual hyperparameter tuning, tune length can be defined for automated hyperparameter tuning.

To speed-up processing, users can configure CPU parallel processing depending on the size of the datasets and complexity of the MLA models used for a particular task. Decision as to whether to use parallel processing or not as well as the number of processor cores to be used can be defined at the master module 43 by the user depending on the capacity of the machine available for the modelling. Alternatively, Graphics Processing Unit (GPU) processing is provided as an option particularly for deep learning MLA models enabling parallel computing through thousands of threads at a time using GPUs large number of simple cores.

The processes in hyperparameter tuning, model training/fitting, resampling and creating metamodels is controlled by the implementation of module 37. Module 37 provides functions for creating indices for resampling and K-folds for each of the model accuracy estimation methods defined by module master 43. Based on the number of hyperparameters tuned in the system, seeds can be generated by module 37 for each of the implemented MLA models. The controlling of overall modelling process is based on the calculated index and the seeds generated at 37 as well as the method for model evaluation, parallel processing and related settings specified by the user at the module master 43.

A concrete embodiment of the method and system is described in the following. The method and system uses ten L1 MLA models (RF, GBM, mxnet, SVM, cubist, PLS, SIMPLS, rpart, nnet and LASSO) and three L2 MLA models (glmboost, glm, and xgboost). The data used for this example are indices derived from remote sensing data (NDVI, OSAVI, ARVI, CVI and DVI) and weather data (temperature, precipitation, duration of sunshine and evapotranspiration). At reference sign 6 of Fig. 1 the raw input data containing ***q*** variables with ***r*** observations is prepared and loaded to the system. The number of variables ***q*** is equal to nine in this example, i.e. five RS indices and four variables for weather conditions. In compliance with reference signs 7 - 11 the raw input data is pre-processed, i.e. data cleansing, transformation, normalization, data mapping and outlier detection and treatment. At method step represented by reference sign 12 the processed data which is ready to be used for modelling contains ***i*** variables with ***z*** observations each. If no variables and/or observations were removed during the data processing, ***i*** and ***z*** will be the same as *q* and ***r*** respectively. Assuming that 70% of the data is used for training and 30% for testing, L1 Trainset 13 contains ***i*** variables with ***j*** observations that constitute 70% of the ***z*** observations created at step 12. The testset data 14 consists of ***i*** variables with ***t*** observations that constitute 30% of the ***z*** observations created at step 12.

In L1 training process 15 according to FIG. 2, hyperparameters are tuned both for L1 MLA and L2 MLA models mentioned above. At step 16 the L1 Trainset data is resampled for use in repeated cross-validation while training the L1 MLA models 17. Reference sign 19 presents ***n*** trained and evaluated L1 MLA models producing ***n*** predictions as outputs of L1 training process. In this example ***n*** corresponds to the ten L1 MLA models (RF, GBM, mxnet, SVM, cubist, PLS, SIMPLS, rpart, nnet and LASSO). With the assumption that two of the L1 MLA models showed poor performance (e.g. PLS and nnet), the ***n-d*** L1 models to be selected are 10-2 L1 MLA models excluding these two poorly performing models where ***n*** is the total number of models and ***d*** the models to be excluded from the next step. Thus, L2 Trainset 21 contains eight models i.e. RF, GBM, mxnet, SVM, cubist, SIMPLS, rpart and LASSO, and their corresponding predictions produced during the L1 training process. The L2 Trainset 21 will be used as an input for training L2 models.

In L2 training process, L2 trainset data 21 produced are resampled in step 22 for use in repeated cross-validation while training the L2 models (glmboost, glm, and xgboost) at step 23. At step 25 ***m*** trained and evaluated L2 models are generated as outputs, wherein ***m*** in this case refers to 3 models i.e. glmboost, glm, and xgboost. In L2 testing process the L2 MLA models are evaluated for over-fitting/under-fitting by predicting on independent testset data 14. Assuming that xgboost showed the best performance among the three L2 MLA models, it will be selected as the final metamodel to be used for production (yield estimation) using unseen data 29 containing ***i*** variables and ***t*** observations.

The estimated results 31 contain yield values with their corresponding geographic location, timestamp and crop/grassland type for which yield was estimated. Provided that there is independent reference yield data for the particular geographic location(s), crop type(s) and time step(s), the estimated yield can be validated using a method provided at 33.

## Claims

1. A method of yield estimation for arable crops and/or grasslands comprising the steps of
- receiving multiple datasets from one or more data sources wherein said received datasets include data being relevant for the crop/grassland and/or crop/grassland yield, in particular on a spatio-temporal scale, and pre-processing the received multiple datasets to generate trainset and testset data,
- training at least two different Level One Machine Learning Algorithm models (L1 MLA) selected from a database providing different L1 MLA models with the trainset data,
- training of Level Two Machine Algorithm (L2 MLA) models selected from a database providing different L2 MLA models by using prediction datasets generated by at least some of the trained Level One Machine Learning Algorithm (L1 MLA) models based on input trainset data,
- selecting at least one trained Level Two Machine Learning Algorithm model (L2 MLA model) for subsequent prediction of crop yield on unseen datasets.

2. The method according to claim 1 wherein the received multiple datasets refer to different type of data, in particular numeric and categorical data, and wherein the datasets can be obtained from different data sources including at least one of indices derived from remote sensing data such as NDVI, OSAVI, ARVI, CVI and DVI, and/or at least one of meteorological data such as temperature, precipitation, duration of sunshine and evapotranspiration, and/or drought indicators and/or information on farming management practices.

3. The method according to any of the preceding claims wherein an automated exploration and/or analysis of the received multiple datasets is performed in order to evaluate the individual impact of the different datasets on the crop/grassland yield estimation, wherein exploration and/or analysis of datasets includes generation of an overview by calculation of descriptive statistics from the received datasets and/or generation of pairwise correlation matrices in order to identify relationships between predictors and the repsonse, i.e. crop/grassland yield.

4. The method according to any of the preceding claims wherein pre-processing of received datasets involves normalization and/or transformation of the received datasets and/or detection of nodata values and/or outliers and/or near-zero variables included in the received datasets in combination with appropriate treatment of said detected variable and outliers.

5. Method according to any of the preceding claims, wherein pre-processing of the received datasets further includes detecting categorical variables included in the received datasets and creating new dummy variables representing said categorical variables to be used by the L1 and/or L2 MLA models.

6. Method according to any of the preceding claims wherein hyperparameter tuning is performed for the L1 MLA models before model training.

7. The method according to any of the preceding claims wherein a limited number of the trained L1 MLA models is selected based on evaluation metrics calculated for the trained L1 MLA models wherein only prediction datasets generated by the selected L1 MLA models are used for subsequent training of L2 MLA models.

8. The method according to any of the preceding claims wherein the selection of at least one trained L2 MLA model is based on evaluation metrics calculated for each trained L2 MLA models providing prediction results on testset data wherein preferably said testset data is generated by partitioning the received multiple datasets into trainset and testset data.

9. The method according to claim 7 or 8 wherein statistical measures such as MAE, RMSE, R^{2,} are automatically calculated und used as evaluation metrics for evaluating L1/L2 MLA models.

10. The method according to any of the preceding claims wherein L1 MLA models and/or L2 MLA models are trained by resampling the used trainset data and using methods like Bootstrapping and/or K-Fold Cross-Validation (CV) and/or Repeated K-fold Cross-Validation (repeated CV) and/or Leave-One-Out Cross-Validation (LOOCV).

11. Method according to any of the preceding claims wherein a user interface is provided enabling manual selection of L1/L2 MLA models and/or groups of L1/L2 MLA models to be used and/or manual configuration of hyperparameter and/or configuration on metric calculation for L1/L2 MLA models evaluation and/or configuration of sample size and/or resampling technique for training datasets and/or configuration of data pre-processing and/or data partitioning.

12. Method according to any of the preceding claims wherein the method is used for crop/grassland yield and yield loss estimation, wherein yield loss is estimated as a variation between current yield estimation and a reference yield, for instance based on a long term mean.

13. Method according to any of the preceding claims where estimation of yield is performed for specific crops or multiple crops simultaneously and wherein preferable historical and current yield of crops can be estimated.

14. Method according to any of the preceding claims 12 or 13 wherein estimated yield loss is subsequently used for setting contractual basis for crop/grassland insurance.

15. A system for crop/grassland yield estimation comprising an input interface for receiving multiple data sets from one or more data sources and at least one processing means for executing the method according to any of the preceding claims.

16. A computer-readable storage device storing program code which when executed by a processor performs the method according to any of the claims 1 to 14.
